# EUROPEAN PATENT APPLICATION

(11) **EP 1 095 985 A1**
(43) Date of publication of application: **02.05.2001**
(21) Application number: 00122504.4
(22) Date of filing: 14.10.2000
(51) Int. Cl.: C09B 29/045, C09B 29/09

(54) **Blue monoazo disperse dyestuff**

(30) Priority: 28.10.1999 JP 30735799
(71) Applicant: DyStar Textilfarben GmbH & Co. Deutschland KG, 60318 Frankfurt am Main (DE)
(72) Inventor: Himeno, Kiyoshi, Munakata-shi, Fukuoka (JP)

(57) **Abstract**

The present invention refers to a blue monoazo disperse dyestuff represented by the following general formula (1) 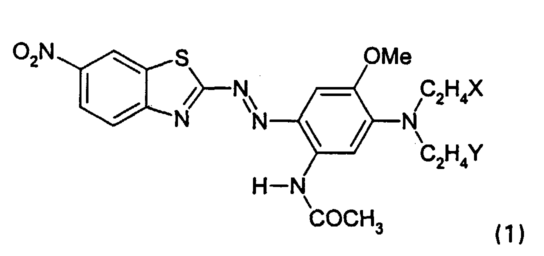 wherein
X and Y independently from one another represent a hydrogen atom, a cyano group, a group R-CO-O or a group RO-CO-O where R is a straight chain or branched alkyl with 1-4 carbon atoms,
but excluding the case where X and Y are simultaneously hydrogen atoms, a method for its preparation, a method for dyeing or printing fibre materials with said dyestuff and fibre material dyed or printed with said dyestuff.

## Description

The present invention relates to novel blue monoazo disperse dyestuffs, more particularly to water-insoluble blue monoazo disperse dyestuffs which are outstanding in their levelling, light fastness, washing fastness and build-up properties and, furthermore, which possess excellent discharge properties. Furthermore, the present invention relates to a method of dyeing or printing fibre materials using these blue monoazo disperse dyestuffs, and also to the fibre materials dyed or printed in this way.

In recent years, as a dyeing processing technique, the coloured discharge printing system has been used for reasons of fashion, raising quality and improving the added value. The characteristic feature of this system is that printed patterns can be vividly and finely expressed. Hitherto, Colour Index Number Disperse B-106 (hereinafter referred to as B-106) has been used as the blue dyestuff employed in coloured discharge printing utilizing this system.

However, B-106 cannot be said to be adequate in terms of its fastness, and there is a strong demand from the industry for the development of dyestuffs which are dischargeable blue dyestuffs of excellent dyeing properties, and which are outstanding in terms of the various measures of fastness, in particular washing fastness.

The present invention has the objective of offering blue disperse dyestuffs which, as well as having excellent discharge properties, are outstanding in their dyeing properties and fastness such as washing fastness and, moreover, which show excellent build-up properties. A further problem addressed by the present invention is to offer an improved method of dyeing or printing fibre materials by employing these blue disperse dyestuffs, together with fibre materials dyed or printed in this way.

The essence of the present invention lies in blue monoazo disperse dyestuffs represented by the following general formula (1) 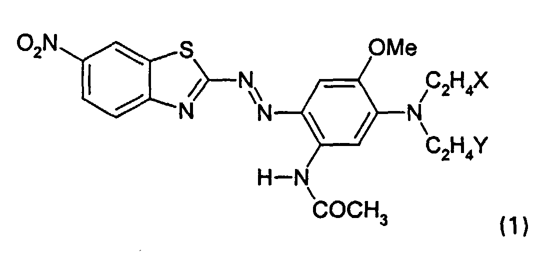 wherein
X and Y independently from one another represent a hydrogen atom, a cyano group, a group R-CO-O or a group RO-CO-O where R is a straight chain or branched alkyl with 1-4 carbon atoms,
but excluding the case where X and Y are simultaneously hydrogen atoms
R is a straight-chain or branched alkyl group with from 1 to 4 carbon atoms, namely methyl, ethyl, n-propyl, isopropyl, n-, sec-, iso- or tert-butyl, with methyl and ethyl being particularly preferred.

Of these, the dyestuffs in which groups X and Y are both R-CO-O groups are particularly outstanding in their dyeing effects and are easy to produce, so are particularly suitable.

The azo dyestuffs represented by aforesaid general formula (1) can be readily produced by the diazotization of 2-amino-6-nitrobenzothiazole in the usual way and then coupling with a coupling component represented by general formula (2) 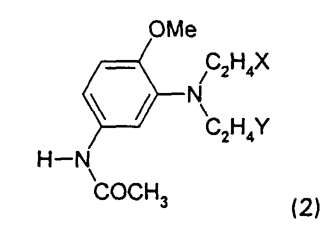 wherein X and Y have the meanings given above.

As examples of the coupling component represented by general formula (2), there are the following compounds:
N,N-diacetoxyethyl-2-methoxy-5-acetylaminoaniline,
N,N-diethoxycarbonyloxyethyl-2-methoxy-5-acetylaminoaniline and
N-ethyl,N-cyanoethyl-2-methoxy-5-acetylaminoaniline.

The fibre materials which can be dyed by the azo dyestuffs of the present invention are not particularly restricted providing they can normally be dyed by disperse dyestuffs, but there may be cited, as examples, hydrophobic fibre materials such as those comprising polyester fibre like polyethylene terephthalate, the polycondensation product of terephthalic acid and 1,4-bis-(hydroxymethyl)cyclohexane or the like, or mixed-spun or mixed-weave products of such polyester fibres with natural fibres such as cotton, silk, wool or the like, or with synthetic fibres such as nylon or the like.

In carrying out dyeing using the dyestuffs of the present invention, an azo dyestuff represented by aforesaid general formula (1) may be dispersed in an aqueous medium by normal methods using a dispersing agent, and a dyebath or printing paste obtained, after which dip dyeing or printing is conducted.

For example, in the case where dip dyeing is performed, the polyester fibre or the mixed-spun or mixed-weave product thereof can be dyed with outstanding fastness by employing a high temperature dyeing method, carrier dyeing method, thermosol dyeing method or other such usual dyeing treatment method.

The dyed fabric obtained by the aforesaid dip dyeing or printing using an azo dyestuff of the present invention is outstanding in its fastness and discharge properties, and by means of a colour discharge treatment there can be provided a dyed pattern which is outstanding in terms of vividness, fineness and the various measures of fastness.

Moreover, the present invention offers a method of dyeing or printing fibre materials using a dyestuff of aforesaid formula (1) of the present invention, in particular a method for the dyeing of fibre materials which is characterized in that a fibre material is dyed or printed using this dyestuff and then a colour discharge treatment carried out, and the invention also offers fibre materials which have been dyed or printed in this way.

The discharge treatment is carried out following normal procedure by applying a bleaching chemical to the dyed material and then conducting after-treatment. As the discharge method, there can be advantageously selected the method of white discharge, colour discharge or semi-discharge.

Again, the azo dyestuffs of the present invention can be jointly employed along with dyestuffs of the same or different system, for example they can be jointly used along with dischargeable B-106 or other such nitrothiazole type dyestuff.

Next, the present invention is explained in more specific terms by examples but, providing that the essence of the invention is retained, the present invention is not to be restricted to the examples given.

### Example 1

0.5 g of the azo dyestuff of the present invention where, in aforesaid general formula (1), X and Y are both acetyloxy groups was dispersed in 2 litres of water containing 0.5 g of naphthalenesulphonic acid/ formaldehyde condensate and 0.25 g of a higher alcohol sulphate ester, and a dyebath prepared. When 100 g of polyester fibre was immersed in this dyebath, then dyeing carried out for 60 minutes at 130°C, after which soaping, water-washing and drying were performed, a blue dyed material was obtained. Furthermore, when a white discharge paste of the following composition was printed on top of the blue material obtained and a discharge treatment effected, there was obtained a material with an excellent white discharge on a blue background.

### White discharge paste composition

| | |
|---|---|
| tin(I) chloride | 10 parts |
| Tetrosin P-300 | 3 parts |
| (carrier; commercial product of Yamakawa Chemical Industry Co., Ltd. | |
| urea | 3 parts |
| 12% Meypro Gum | 60 parts |
| (printing paste; commecial product of Meyhall Chemical A.G.) | |
| water | 24 parts |

### Discharge treatment process

printing → drying → steaming (170°C, 7 minutes) → water-washing → reduction wash → water-washing → drying

The dyestuff of Example 1 was obtained by performing the diazotization of 2-amino-6-nitrobenzothiazole in 85% phosphoric acid by means of 40% nitrosylsulphuric acid, and then carrying out coupling in ice water in which N,N-diacetoxyethyl-2-methoxy-5-acetylaminoaniline had been dissolved, after which the crystals produced were filtered off. The dyestuff comprised blue coloured crystals of λₘₐₓ (in acetone) 580 nm.

### Comparative Examples 1 and 2

Polyester fibre was dyed using B-106 in the same way as in Example 1, and when evaluation was carried out the results in Table 1 were obtained. This was repeated using the compound of the formula 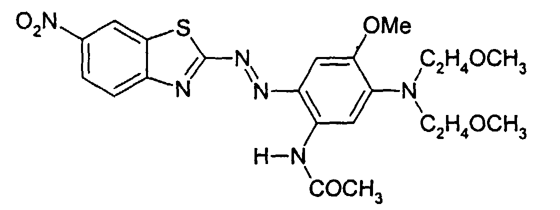 (see Japanese Unexamined Patent Publication No. 55-80584)

Now, the evaluation of the white discharge property was carried out by assessing the white discharge region using the grey scale, with grade 5 being the highest level and 1 the worst.

The washing fastness was measured based on JIS L0844-1973 method A-4, and the washing fastness was measured based on method ISO 105-E01.

**Table 1**

| | **λ**_{**max**} **(nm) in acetone** | **washing fastness** | **water fastness** | **white discharge property** |
|---|---|---|---|---|
| Example 1 | 580 | 4 | 4-5 | 4-5 |
| Comparative Example 1 (B-106) | 606 | 2 | 2 | 4-5 |
| Comparative Example 2 | 575 | 3-4 | 2-3 | 3-4 |

Comparative Example 1 was clearly inferior in terms of fastness.

Comparative Example 2 was somewhat inferior in terms of water fastness and discharge property.

### Example 2 to 4

The dyestuffs shown in Table 2 were synthesized based on Example 1, and the dyeing of polyester fibre carried out in the same way as in Example 1, after which the fastness and discharge properties were measured in each case. The results are shown in Table 2.

**Table 2**

| **Example Number** | **X/Y** | **λ**_{**max**} **(nm)** | **washing fastness** | **water fastness** | **white discharge property** |
|---|---|---|---|---|---|
| 2 | OCOOC₂H₅/ OCOOC₂H₅ | 575 | 4-5 | 4-5 | 4-5 |
| 3 | CN/H | 582 | 4 | 4 | 4-5 |
| 4 | OCOC₂H₅/H | 590 | 4-5 | 4-5 | 4-5 |

In spite of the fact that the compounds of the present invention are very similar in structure to, for example, the compound known from Japanese Unexamined Patent Publication No. 55-80584, they are extremely valuable as dyestuffs for polyester fibres which are outstanding in particular in their discharge properties, when compared to the known example.

## Claims

1. Blue monoazo disperse dyestuff represented by the following general formula (1) 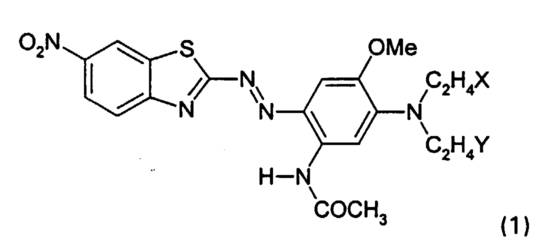 wherein
X and Y independently from one another represent a hydrogen atom, a cyano group, a group R-CO-O or a group RO-CO-O where R is a straight chain or branched alkyl with 1-4 carbon atoms,
but excluding the case where X and Y are simultaneously hydrogen atoms.

2. Blue monoazo disperse dyestuff according to claim 1, wherein X and Y are both R-CO-O.

3. Blue monoazo disperse dyestuff according to claim 1 and/or 2, wherein R is methyl or ethyl.

4. Method for the preparation of a blue monoazo dyestuff according to claims 1 to 3, by diazotization of 2-amino-6-nitrobenzothiazole in the usual way and then coupling with a coupling component represented by general formula (2) 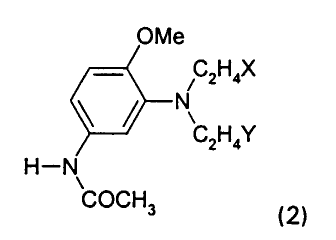 wherein X and Y have the meanings given in claim 1.

5. Method for dyeing or printing fibre materials wherein a blue monoazo dyestuff according to one or more of claims 1 to 3 is by employed.

6. Fibre material dyed or printed with a blue monoazo dyestuff according to one or more of claims 1 to 3.
